# EUROPÄISCHE PATENTSCHRIFT

(11) **EP 3 206 822 B1**
(45) Veröffentlichungstag und Bekanntmachung des Hinweises auf die Patenterteilung: **12.05.2021**
(21) Anmeldenummer: 15793715.2
(22) Anmeldetag: 12.10.2015
(51) Int. Cl.: B23F 23/12, B23F 17/00, B23F 19/05, B24B 53/075, B24B 53/085

(54) **VERFAHREN ZUM ABRICHTEN EINES HONWERKZEUGS UND VERFAHREN ZUM HONEN EINES ZAHNRADS**
METHOD FOR DRESSING A HONING TOOL, AND METHOD FOR HONING A GEAR
PROCÉDÉ DE DRESSAGE D'UN OUTIL DE RECTIFICATION ET PROCÉDÉ DE RECTIFICATION D'UNE ROUE DENTÉE

(30) Priorität: 16.10.2014 DE 102014115022
(43) Veröffentlichungstag der Anmeldung: 23.08.2017
(73) Patentinhaber: Präwema Antriebstechnik GmbH, 37269 Eschwege/Werra (DE)
(72) Erfinder: SCHIEKE, Jörg, 99092 Erfurt-Marbach (DE); HOLDERBEIN, Walter, 37269 Eschwege (DE)
(74) Vertreter: Cohausz & Florack
(86) Internationale Anmeldenummer: PCT/EP2015/073539
(87) Internationale Veröffentlichungsnummer: WO 2016/058979

(56) Entgegenhaltungen:
- DE-A1-102012 108 717
- DE-U1-202006 002 878
- US-A- 6 164 880
- US-A1- 2014 090 503

## Beschreibung

Die Erfindung betrifft ein Verfahren zum Abrichten eines für die Feinbearbeitung der Zähne eines Zahnrads bestimmten Honwerkzeugs, gemäß dem Oberbegriff des Anspruchs 1, wie z.B. aus der DE20 2006 002878 U1 bekannt. Für die Abrichtbearbeitung wird ein Abrichtrad eingesetzt, das während des Abrichtens mit dem abzurichtenden Honwerkzeug unter einem Achskreuzwinkel kontinuierlich abwälzt, so dass an dem Abrichtrad ausgebildete Zähne in Eingriff kommen mit an dem Honwerkzeug ausgebildeten Zähnen, die jeweils eine abzurichtende Kopffläche und ebenso abzurichtende Zahnflanken aufweisen

Die Erfindung betrifft ebenfalls ein Verfahren zum Honen eines Zahnrades gemäß dem Oberbegriff des Anspruchs 14, wie z.B. auch aus der DE20 2006 002878 U1 bekannt.

Das Verzahnungs- bzw. Zahnradhonen ist ein spanendes Feinbearbeitungsverfahren mit geometrisch unbestimmter Schneide zum Bearbeiten von Zahnrädern. Dabei werdenüblicherweise gehärtete Zahnräder mit einem Honwerkzeug, auch Honrad, Honring oder Honstein genannt, gehont. Das Honwerkzeug besteht beispielsweise aus einer Kunstharz- oder Keramikbindung, in die Hartstoffschleifkörner aus Edelkorund, Sinterkorund oder Bornitrid eingebettet sind. Durch das kontinuierlich arbeitende Zahnradhonverfahren lassen sich vor allem kurzwellige Verzahnungsabweichungen korrigieren. Diese können zu Geräuschen führen, die für das menschliche Ohr sehr unangenehm sind. Durch ihren hochfrequenten Charakter können sie sich zudem negativ auf die Lebensdauer des jeweiligen Bauteils auswirken.

Während der kontinuierlich ablaufenden Honbearbeitung wälzen das zahnradförmige Honwerkzeug und das zu bearbeitende Zahnrad in einer synchronen Drehung aufeinander ab. Die Verzahnungen von Honwerkzeug und Zahnrad kämmen dabei unter einem Achskreuzwinkel, der zwischen den windschiefen Drehachsen von Honwerkzeug und Zahnrad eingestellt ist.

Durch die Abwälzdrehung und den Achskreuzwinkel liegt zwischen den Zahnflanken des Honwerkzeugs und den Zahnflanken des zu bearbeitenden Zahnrads im Wälzkontakt eine gleitende Relativbewegung vor, die den Spanabtrag am Zahnrad bewirkt. Die Gleitbewegung des Honwerkzeugs im Kontakt mit einer Zahnflanke des Zahnrads setzt sich aus einer durch die Abwälzdrehung erzeugten radialen Bewegung und einer durch den Achskreuzwinkel erzeugten axialen Bewegung zusammen. Aus der axialen und radialen Komponente der Gleitbewegung resultieren die für das Zahnradhonen charakteristischen Bearbeitungsspuren, die sich als "Fischgrätmuster" auf den Zahnflanken des fertig bearbeiteten Zahnrads bemerkbar machen.

Durch das Zahnradhonen können vor allem das Geräuschverhalten und die Tragfähigkeit einer Verzahnung durch die Korrektur kurzwelliger Verzahungsabweichungen und durch Einbringen von Druckeigenspannungen im Bereich der Zahnradrandzone positiv beeinflusst werden.

Das Honwerkzeug wird vor dem ersten Einsatz im Neuzustand und nach einer bestimmten Einsatzdauer abgerichtet. Der Abrichtvorgang dient dazu, herstellungs- oder verschleißbedingte Formabweichungen des Honwerkzeugs von der jeweils optimalen Sollformgebung zu korrigieren und so das jeweilige Werkzeug hinsichtlich seiner Geometrie zu schärfen.

Insbesondere bei innenverzahnten Honwerkzeugen, sogenannten Honringen, erfolgt das Abrichten üblicherweise zweistufig. In einem ersten Schritt wird dabei der Kopfkreis- bzw. Innendurchmesser des Honrings mit Hilfe einer üblicherweise zylindrischen Abrichtrolle abgerichtet. In einem zweiten Schritt werden dann die Zahnflanken des Honrings mit einem Abrichtzahnrad abgerichtet.

Die Folge dieser Arbeitsweise ist, dass die abgerichteten Kopfflächen und eine jeweils abgerichtete Zahnflanke eines Zahns des Honrings im Bereich des Zahnkopfs in einer scharfkantigen Kopfecke zusammenlaufen. Die von dieser Kopfecke bei der Honbearbeitung beschriebene Bahn ändert sich über die Nutzlänge des Honwerkzeugs. Im Neuzustand entsteht in Folge der scharfkantigen Kopfecke am Zahnrad-Werkstück im Zahnfußbereich eine scharfe Kerbe, die die Zahnfußtragfähigkeit oder Zahnfußfestigkeit der Verzahnung des Zahnrads herabsetzt. Dieser Effekt nimmt mit abnehmender Nutzlänge des Honwerkzeugs, d.h. zunehmendem Verschleiß bzw. wiederholten Abrichtvorgängen ab. Durch Verschleiß und wiederholtes Abrichten wird beispielsweise bei Honwerkzeugen, die als Honring ausgebildet sind, der Radius der erzeugten Fußausrundung vergrößert.

Für die Honbearbeitung von Zahnrädern, für die eine

Feinbearbeitung auch des Zahnfußbereichs gefordert wird, wird deshalb künstlich ein Zustand des Honwerkzeugs hergestellt, der sich im Einsatz erst nach einer gewissen Gebrauchsdauer bzw. nach einer bestimmten Zahl von Abrichtvorgängen einstellen würde. Die effektive Dauer, über die sich das Honwerkzeug nutzen lässt, wird dadurch deutlich gegenüber der Nutzdauer verkürzt, über die das Honwerkzeug ausgehend vom Neuzustand eigentlich einsetzbar wäre. Die künstliche Verkürzung der Standzeit führt naturgemäß zu erhöhten Werkzeugkosten.

Moderne Getriebekonstruktionen verlangen verstärkt danach, dass bei der Honbearbeitung von Zahnrädern der Zahnfußbereich mitgehont wird, um durch eine Optimierung des Oberflächenzustands auch im Zahnfußbereich optimale Tragfähigkeiten zu erhalten. Dabei wird angestrebt, Sprünge in der Oberflächenbeschaffenheit oder der Geometrie im Bereich des Übergangs zwischen der jeweiligen Zahnflanke und dem angrenzenden Zahnfußbereich zu vermeiden.

Der Erfindung lag vor diesem Hintergrund die Aufgabe zu Grunde, einerseits ein Verfahren anzugeben, welches es ermöglicht, ein Honwerkzeug so auszubilden, dass es auch im Zahnfußbereich eine Honbearbeitung durchführen kann, durch die weder die Geometrie noch die Tragfähigkeit des jeweiligen Zahns negativ beeinflusst werden. Andererseits sollte ein Verfahren angegeben werden, mit dem es möglich ist, Zahnräder so feinzubearbeiten, dass auch in ihren Zahnfußbereichen im Hinblick auf die Tragfähigkeit optimale Oberflächenbeschaffenheiten gewährleistet sind.

In Bezug auf das Verfahren zur Ausbildung eines

Honwerkzeugs hat die Erfindung diese Aufgabe dadurch gelöst, dass beim Abrichten eines Honwerkzeugs die in Anspruch 1 angegebenen Arbeitsschritte durchlaufen werden.

In Bezug auf das Verfahren zur Feinbearbeitung von Zahnrädern besteht die von der Erfindung vorgeschlagene Lösung der oben genannten Aufgabe in dem in Anspruch 14 angegebenen Honverfahren.

Vorteilhafte Ausgestaltungen der Erfindung sind in den abhängigen Ansprüchen angegeben und werden nachfolgend wie der allgemeine Erfindungsgedanke im Einzelnen erläutert.

Die Erfindung geht von dem Gedanken aus, beim Abrichten eines für die Feinbearbeitung der Zähne eines Zahnrads bestimmten Honwerkzeugs den Kopf und die Flanken der Zähne des Honwerkzeugs mit einem Abrichtwerkzeug gemeinsam abzurichten. Das dazu eingesetzte Abrichtwerkzeug hat erfindungsgemäß eine definierte, auf das mit dem Honwerkzeug zu honende Zahnrad-Werkstück abgestimmte Fußgeometrie. Die Kopfform der Zähne des Honwerkzeugs ändert sich dadurch über die Nutzlänge des Honwerkzeugs, ist aber nicht mehr scharfkantig. Infolgedessen gelingt es, die am jeweiligen Zahnrad-Werkstück abgebildete Geometrie über die gesamte Nutzlänge des Honwerkzeugs annähernd konstant zu halten. Dadurch wird die Kerbwirkung am Übergang von den Zahnflanken in den zwischen ihnen jeweils liegenden Zahnfußbereich minimiert. Die Notwendigkeit, künstlich einen Gebrauchszustand des Honwerkzeugs herzustellen, wie er bei normalem Einsatz erst nach längerem Gebrauch vorliegt, entfällt damit.

Beim erfindungsgemäßen Verfahren zum Abrichten eines für die Feinbearbeitung der Zähne eines Zahnrads bestimmten Honwerkzeugs wird daher in Übereinstimmung mit dem eingangs erläuterten Stand der Technik ein Abrichtwerkzeug eingesetzt, das während des Abrichtens mit dem abzurichtenden Honwerkzeug unter einem Achskreuzwinkel kontinuierlich abwälzt, so dass an dem Abrichtrad ausgebildete Zähne in Eingriff kommen mit an dem Honwerkzeug ausgebildeten Zähnen, die abzurichtende Kopfflächen und ebenso abzurichtende Zahnflanken aufweisen.

Erfindungsgemäß werden dabei in wenigstens einer Zustellung des Abrichtrads sowohl die Kopfflächen als auch die Zahnflanken des Honwerkzeugs bearbeitet. Gleichzeitig werden erfindungsgemäß mit Zahnfußausrundungen, die an den Zähnen des Abrichtrads vorgesehen sind, sprungfreie Übergänge von den Zahnflanken zu den Kopfflächen des Honwerkzeugs abgebildet.

In entsprechender Weise sieht das erfindungsgemäße Verfahren zum Honen eines Zahnrads mittels eines Honwerkzeugs, das während des Honvorgangs unter einem Achskreuzwinkel kontinuierlich mit dem zu honenden Zahnrad abwälzt, so dass die Zähne des Honwerkzeugs mit den Zähnen des Zahnrads in Eingriff kommen, vor, dass das Honwerkzeug durch Anwendung des erfindungsgemäßen Abrichtverfahrens abgerichtet wird, so dass zwischen den Kopfflächen und den Zahnflanken des Honwerkzeugs sprungfreie Übergänge gebildet sind, und dass in wenigstens einer Zustellung des Honwerkzeugs sowohl die Kopfflächen als auch die Zahnflanken des Honwerkzeugs die zu honende Verzahnung bearbeiten und mit den Zahnflanken und den Kopfflächen des Honwerkzeugs Zahnfußausrundungen an den Zähnen des Zahnrads abgebildet werden.

Beim erfindungsgemäßen Abrichten eines Honwerkzeugs werden folglich in wenigstens einer Zustellung des Abrichtwerkzeugs in einem Zuge sowohl die Kopfflächen als auch die Zahnflanken des Honwerkzeugs bearbeitet. Dabei kämmen das Abrichtwerkzeug und das Honwerkzeug in einer synchronen Drehbewegung, wobei das Abrichtwerkzeug soweit zugestellt wird, bis die geforderte Sollgeometrie des Honwerkzeugs herausgearbeitet ist.

Im Unterschied zu vorbekannten Abrichtverfahren ist es bei erfindungsgemäßer Vorgehensweise somit nicht mehr erforderlich, zwei separate Abrichtwerkzeuge zum Abrichten der Kopfflächen und Zahnflanken des Honwerkzeugs bereitzustellen, die das Honwerkzeug in zwei separaten Arbeitsgängen abrichten. Vielmehr erfolgt die Profilierung des Honwerkzeugs erfindungsgemäß durch ein Abrichtwerkzeug in einem einzigen Arbeitsgang. So sind einerseits die Werkzeugkosten und andererseits die Abrichtzeiten reduziert.

Bei dem erfindungsgemäß eingesetzten Abrichtwerkzeug handelt es sich typischerweise um ein zahnradförmiges Abrichtrad.

Bei dem Honwerkzeug handelt es sich typischerweise um einen innenverzahnten Honring oder ein außenverzahntes Honrad. Ein innenverzahnter Honring eignet sich insbesondere zur großtechnischen Serien-Hartfeinbearbeitung außenverzahnter Zylinder- oder Stirnräder. Im Vergleich zu außenverzahnten Werkzeugen weist der innenverzahnte Honring im Wälzeingriff mit der zu fertigenden Verzahnung eine höhere Überdeckung auf, so dass der Werkzeugverschleiß in der Regel reduziert und die Werkzeugstandzeit erhöht ist. Steht jedoch eine ausreichend steife Werkzeugmaschine für das Abrichten zur Verfügung, kann es jedoch auch Vorteile haben, ein nach Art eines Zahnrades mit einer Außenverzahnung versehenes radförmiges Abrichtwerkzeug einzusetzen.

Das erfindungsgemäße Verfahren kann besonders effizient zum Abrichten schrägverzahnter Honwerkzeuge eingesetzt werden, wobei das Abrichtrad dann ebenfalls schrägverzahnt sein kann. Jedoch sind auch geradverzahnte Abrichträder möglich.

Ein "Zustellen" des Abrichtwerkzeugs in Bezug auf das Honwerkzeug oder des Honwerkzeugs relativ zu einem zu honenden Zahnrad bedeutet hier, dass durch die mit der Zustellung bewirkte Veränderung der relativen Position die jeweils kämmenden Zähne im Wälzeingriff gegeneinander gepresst sind, so dass ein Schleifmaterial- bzw. Spanabtrag zwischen dem jeweils bearbeitenden Werkzeug und dem jeweils bearbeiteten Werkstück erfolgt. Beim Abrichten findet in einer "Zustellung" somit zwischen Abrichtrad und Honwerkzeug ein Schleifkornabtrag am Honwerkzeug statt. Genauso findet in Folge der Zustellung bei der Honbearbeitung ein durch den Kontakt mit dem Honwerkzeug bewirkter Materialabtrag am Zahnrad statt.

Dazu können in an sich bekannter Weise beim erfindungsgemäßen Abrichten das Abrichtrad und das Honwerkzeug oder beim erfindungsgemäßen Honbearbeiten das Honwerkzeug und das Zahnrad in einer Werkzeugmaschine jeweils mit einem eigenen Antrieb jeweils um eine Drehachse angetrieben sein. Zudem können in ebenfalls an sich bekannter Weise Stellantriebe vorgesehen sein, um die Relativposition von Abrichtrad und Honwerkzeug oder Honwerkzeug und Zahnrad entlang der Drehachse des Abrichtrads bzw. Zahnrads und einer Richtung quer dazu zu verstellen. Das Zustellen des Abrichtrads relativ zum Honwerkzeug kann beispielsweise durch eine Vorschubbewegung entlang der den Achsabstand definierenden, zu den beiden Drehachsen senkrechten Verbindungslinie erfolgen. Zudem kann ein Span- oder Schleifkornabtrag durch das Einbringen eines Winkeloffsets innerhalb der gekoppelten Drehbewegung der Achsantriebe bewirkt werden, so dass die Zahnflanken durch die Drehantriebe gegeneinander verspannt werden.

Um eine im Hinblick auf das angestrebte Bearbeitungsergebnis optimale Formgebung der Kopfflächen und Zahnflanken des Honwerkzeugs einerseits und der Zahnflanken und des Zahnfußbereichs des zu honenden Zahnrads andererseits zu ermöglichen, sind an den Zähnen des erfindungsgemäß eingesetzten Abrichtwerkzeugs Zahnfußausrundungen vorgesehen, mit denen am abzurichtenden Honwerkzeug sprungfreie Übergänge von den Zahnflanken zu den Kopfflächen abgeformt werden.

"Sprungfrei" bedeutet in diesem Zusammenhang, dass die jeweilige Zahnflankenfläche beim erfindungsgemäßen Abrichten des erhaltenen Honwerkzeugs in einem kontinuierlichen, gekrümmten Verlauf in die Kopffläche des jeweiligen Zahns übergeht und beim erfindungsgemäß geformten Zahnrad in einem ebenso unterbrechungsfreien, gekrümmten Verlauf in den Zahnfußbereich des jeweiligen Zahnradzahns übergeht. Es existiert im Bereich der betreffenden Übergänge somit keine Kerbe oder Kante, die durch das Abrichtrad im Bereich des Übergangs zwischen Kopffläche und Zahnflanke an dem Honwerkzeug abgebildet wird.

Bei erfindungsgemäßer Vorgehensweise sind somit zwischen den Zahnflanken und den Kopfflächen des Honwerkzeugs durch das Abrichtrad insbesondere Übergange hergestellt, die in einem Schnitt quer zur Drehachse des Abrichtrads einen kontinuierlich gekrümmten Kurvenverlauf beschreiben. Beim Abrichten des Honwerkzeugs gleitet folglich der jeweils zugeordnete Zahn des Abrichtrads in wenigstens einer Zustellung vom Zahneingriff bis zum Zahnaustritt in einer kontinuierlichen Bewegung über die Kopffläche und Zahnflanke des Zahns des Honwerkzeugs. Das Abrichten der Kopfflächen und Zahnflanken des Honwerkzeugs erfolgt so in einer kontinuierlichen Bewegung in einem Arbeitsgang.

Das erfindungsgemäße Abrichten des Honwerkzeugs kann in an sich bekannter Weise in einer konventionellen zum Honen von Zahnrädern oder desgleichen eingesetzten Honmaschine erfolgen. Hierzu kann das erfindungsgemäße ausgebildete Abrichtwerkzeug an Stelle des jeweils mit einer Verzahnung versehenen Werkstücks auf der Werkstückspindel der Honmaschine aufgespannt werden. Konventionelle Honmaschinen weisen üblicherweise eine ausreichende Zahl von Bewegungs- und Stellachsen (Drehachse B = Werkzeugspindel, Drehachse C = Werkstückspindel, Stellachse X = quer zur Werkstückspindel C ausgerichtete Bewegungsachse des Werkzeugquerschlittens, Stellachse Z = quer zur Bewegungsachse B ausgerichtete Bewegungsachse des Werkzeuglängsschlittens, Achskreuzwinkel W, optional Stellachse Y = vertikal zu den Stellachsen X,Y ausgerichtete Stellachse für eine Relativbewegung zwischen Werkstück und Werkzeug) auf, um einerseits die erforderlichen Relativbewegungen während der Bearbeitung und andererseits die Einstellung der Positionen vorzunehmen, in der bei der Abrichtbearbeitung das Abrichtwerkzeug und das abzurichtende Honwerkzeug und bei der Honbearbeitung das Honwerkzeug und das zu bearbeitende Zahnrad relativ zueinander angeordnet sein müssen.

Abhängig von der bei der jeweils zur Verfügung stehenden Werkzeugmaschine vorhandenen Bewegungsachsen kann es zweckmäßig sein, dass mindestens die Geometrie der der Zahnfußausrundungen der Zähne des Abrichtwerkzeugs einer Sollgeometrie der Zähne des mit dem Honwerkzeug jeweils zu bearbeitenden Zahnrads im fertig bearbeiteten Zustand entspricht. Auf diese Weise wird das Honwerkzeug beim Abrichten so geformt, dass es die Sollform des Übergangs zwischen den Zahnflanken und dem Zahnfußbereich am zu honenden Zahnrad abbildet, ohne dass dazu die Abricht- oder Honbearbeitung einer besonderen Kinematik folgen muss. Besonders effektiv lässt sich diese Vorgehensweise in der Praxis umsetzen, wenn die gesamte Geometrie der Zähne des Abrichtwerkzeugs der Sollgeometrie der Zähne des mittels des Honwerkzeugs zu bearbeitenden Zahnrads im fertig bearbeiteten Zustand entspricht.

Steht dagegen eine Werkzeug- oder Abrichtmaschine zur Verfügung, die über eine ausreichende Zahl an Bewegungs- und Einstellachsen verfügt, um während der Abricht- oder Honbearbeitung die für die Abbildung von Zahnmodifikationen an dem Zahnrad erforderlichen Bewegungen durchzuführen, so kann gemäß einer alternativen Ausgestaltung die Sollgeometrie der Zähne des Honwerkzeugs durch eine während der Abrichtbearbeitung erfolgende Verstellung der relativen Lage von Abrichtwerkzeug und abzurichtendem Honwerkzeug erzeugt werden. Die Verstellung der relativen Lage erlaubt es dann, an dem durch das Honwerkzeug zu bearbeitenden Zahnrad abzubildende Verzahnungsmodifikationen in die Zähne des Honwerkzeugs einzubringen.

Eine insbesondere hinsichtlich der Variabilität der Verfahrensparameter und der sich dadurch eröffnenden vielfältigen Möglichkeiten der Einbringung von Verzahnungsmodifikationen vorteilhafte Ausgestaltung der Erfindung besteht darin, dass die Breite der Zähne des Abrichtwerkzeugs viel kleiner ist als die Breite der Zähne des Honwerkzeugs, so dass das Abrichtwerkzeug zum Überstreichen der Breite der Zähne des abzurichtenden Honwerkzeugs um eine Länge in Längsrichtung einer zwischen zwei Zähnen des Honwerkzeugs vorhandenen Zahnlücke bewegt werden muss, die einem Vielfachen der Breite der Zähne des Abrichtwerkzeugs entspricht. Ein entsprechendes Abrichtwerkzeug ist in der EP 2 036 672 B1 beschrieben, deren Inhalt in die Offenbarung der vorliegenden Anmeldung einbezogen wird.

Durch den bei einem derart schmalen Abrichtwerkzeug erzielten intensiven Kontakt zwischen Abrichtrad und abzurichtendem Werkzeug wird ein effektiver Späneabtransport und damit einhergehend eine besonders saubere Oberfläche an den jeweils bearbeiteten Zahnrädern erzielt. Die geringe Breite des Abrichtrades erlaubt es daher, die Größe von seinen mit dem abzurichtenden Werkzeug in Kontakt kommenden Flächen auch beim Abrichten von Werkzeugen mit schrägverzahnten oder in anderer Weise beliebig komplex geformten Verzahnungen auf ein Minimum zu reduzieren. Entsprechendes gilt beispielsweise, wenn mittels eines erfindungsgemäß schmalen Abrichtrades ein Werkzeug abgerichtet wird, das für die Bearbeitung eines geradverzahnten Werkstücks bestimmt ist. Auf diese Weise kann das erfindungsgemäße Abrichtrad im Zuge des Abrichtvorgangs unabhängig von der Form der jeweils zu bearbeitenden Zähne bei in Eingriff befindlichem Abrichtrad und abzurichtendem Werkzeug in einer weitestgehend frei steuerbaren Bewegung entlang der Zahnflanken des abzurichtenden Werkzeugs bewegt werden.

Wird ein schmales Abrichtrad der voranstehend erläuterten Art für das erfindungsgemäße Abrichtverfahren eingesetzt, so ist die Breite seiner mit dem abzurichtenden Honwerkzeug in Kontakt kommenden Flächen optimalerweise so weit reduziert, dass seine den Zahnflanken des abzurichtenden Werkzeugs zugeordneten Schmalseiten nach Art einer Messerschneide ausgebildet sind oder, soweit dies aus materialtechnischen Gründen nicht möglich ist, zumindest so schmal sind, dass jeweils nur eine minimale Überdeckungsfläche zwischen den Schmalseiten des Abrichtrades und den Flankenflächen des zu bearbeitenden Werkzeugs gegeben ist.

Dementsprechend sieht eine weitere Ausgestaltung der Erfindung vor, dass die Breite der mit dem abzurichtenden Werkzeug in Eingriff kommenden Zähne des Abrichtrades höchstens einem Fünftel, bevorzugt höchstens einem Achtel, der Breite der Zähne des abzurichtenden Werkzeugs entspricht.

Je nach gefordertem Achskreuzwinkel und dem im Neuzustand vorhandenen Aufmaß der üblicherweise lediglich grob vorverzahnten Honwerkzeuge besteht insbesondere bei innenverzahnten Honwerkzeugen die Gefahr, dass es beim Abrichten zwischen den Zähnen des Abrichtwerkzeugs und den Zähnen des abzurichtenden Honwerkzeugs neben dem für den angestrebten Materialabtrag beabsichtigten Zahnkontakt an anderer Stelle der Zahnlücke zu unerwünschten Kollisionen zwischen Abrichtrad und Honwerkzeug kommt. Indem ein Abrichtwerkzeug verwendet wird, dessen mit dem abzurichtenden Honwerkzeug in Kontakt kommenden Zähne in der voranstehend beschriebenen Weise schmaler sind als die Zähne des Honwerkzeugs, so dass eine Relativbewegung in Längsrichtung der jeweiligen Zahnlücke zwischen zwei Zähnen des Honwerkzeugs erforderlich ist, um die Zahnflächen und den Zahnfußbereich des Honwerkzeugs vollständig mit dem Abrichtwerkzeug zu überstreichen, kann dieses Problem sicher umgangen werden.

Ein derart schmales Abrichtrad nimmt aufgrund seiner reduzierten Zahnbreite in Längsrichtung der Lücke zwischen zwei Zähnen des Honrings betrachtet nur einen minimalen Raum ein. Infolgedessen kommt es auch dann zu keiner Kollision zwischen Abrichtwerkzeug und Honwerkzeug, wenn der jeweilige Zahn des Abrichtwerkzeugs in Folge des jeweils eingestellten Achskreuzwinkels in Bezug auf den jeweils mit ihm zur Abrichtbearbeitung in Wälzkontakt befindlichen Zahn schräg ausgerichtet ist und dementsprechend schräg in der von dem betreffenden Zahn begrenzten Zahnlücke des Honwerkzeugs steht. So kann mit einem schmalen die erfindungsgemäß vorgesehenen Zahnfußausrundungen aufweisenden Abrichtwerkzeug der voranstehend beschriebenen Art auf einfache und betriebssichere Weise ein optimal ausgerundeter Übergang zwischen der Kopffläche und den Flanken der Zähne eines Honwerkzeugs abgebildet werden.

Dabei gilt, wie schon erwähnt, dass die Möglichkeiten, während des Abrichtens Verzahnungsmodifikationen, wie z.B. Korrekturen der Profil- oder Flankenlinie, durch eine Anpassung der Prozesskinematik in die Verzahnung des Honwerkzeugs einzubringen, umso größer sind, je geringer die Breite der Zähne des Abrichtwerkzeugs im Vergleich zur Breite der Zähne des abzurichtenden Honwerkzeugs ist.

Der Achskreuzwinkel kann sowohl beim erfindungsgemäßen Abrichten als auch beim erfindungsgemäßen Honen zwischen 3 und 25° betragen. Als praxisgerecht haben sich hier Achskreuzwinkel von 3 - 20° erwiesen.

Je niedriger der gewählte Achskreuzwinkel, umso niedriger sind bei gleicher Drehzahl die relativen

Schnittgeschwindigkeiten zwischen Abrichtrad und Honwerkzeug bzw. dem Honwerkzeug und einem zu honenden Zahnrad. Als vorteilhaft erweist es sich hier, wenn mindestens beim erfindungsgemäßen Honen, jedoch optional auch beim erfindungsgemäßen Abrichten, im Vergleich zum Verzahnungsschleifen niedrige Schnittgeschwindigkeiten von 0,5 - 10 m/s eingestellt werden. Durch die niedrigen Schnittgeschwindigkeiten kann insbesondere beim Honen eine thermische Schädigung (Schleifbrand) der bearbeiteten Zahnräder vermieden werden.

Grundsätzlich kann das Abrichten des Honwerkzeugs im Einflankenkontakt erfolgen. Dabei ist lediglich eine Flanke eines jeweiligen Zahns des Abrichtrads im Kontakt mit einer zugeordneten Flanke eines Zahns des Honwerkzeugs. Es ist jedoch auch möglich, das Abrichten so durchzuführen, dass jeweils wenigstens zwei einander zugewandte Zahnflanken zweier benachbart zueinander angeordneter Zähne des Honwerkzeugs in wenigstens einer Wälzstellung gleichzeitig mit einem Zahn des Abrichtrads in Wälzkontakt stehen. Das Abrichten des Honwerkzeugs erfolgt dann in einer sogenannten "Zweiflankenbearbeitung". Dabei kann die Zustellung zwischen dem Abrichtwerkzeug und dem Honwerkzeug durch eine Veränderung des Achsabstands zwischen Abrichtwerkzeug und Honwerkzeug erfolgen. Beispielsweise wird zwischen einem außenverzahnten Abrichtwerkzeug und einem innenverzahnten Honwerkzeug der Achsabstand vergrößert, um die zum Spanabtrag erforderliche Verspannung zwischen den kämmenden Zahnflanken von Abrichtwerkzeug und Honwerkzeug zu erzeugen.

Nachfolgend wird die Erfindung anhand einer ein Ausführungsbeispiel darstellenden Zeichnung näher erläutert. Es zeigen jeweils schematisch:
- Fig. 1: ein Abrichtwerkzeug und ein Honwerkzeug im Wälzeingriff bei der Abrichtbearbeitung in einer teilgeschnittenen Ansicht;
- Fig. 2: ein weiteres Abrichtwerkzeug und ein Honwerkzeug im Wälzeingriff bei der Abrichtbearbeitung in einer teilgeschnittenen Ansicht;
- Fig. 3A - 3I: jeweils einen Ausschnitt des Abrichtwerkzeugs und des Honwerkzeugs im Wälzeingriff während verschiedener Stadien der Abrichtbearbeitung jeweils in vergrößerter seitlicher Ansicht;
- Fig. 4: einen Ausschnitt eines Zahnkopfbereichs des Honwerkzeugs im Neuzustand;
- Fig. 5: einen Ausschnitt eines Zahnkopfbereichs eines Honrads im Endzustand;
- Fig. 6: einen Ausschnitt des Zahnkopfbereichs des Honwerkzeugs in einem Zwischenzustand;
- Fig. 7: einen Ausschnitt eines gemäß dem Stand der Technik abgerichteten Honwerkzeugs in einer seitlichen Ansicht;
- Fig. 8: einen Ausschnitt einer Profillinie eines gemäß dem Stand der Technik mit einem konventionell abgerichteten Honwerkzeug im Neuzustand gehonten Zahnrads;
- Fig. 9: einen Ausschnitt einer Profillinie eines gemäß dem Stand der Technik mit einem konventionell abgerichteten Honwerkzeug im Endzustand gehonten Zahnrads.

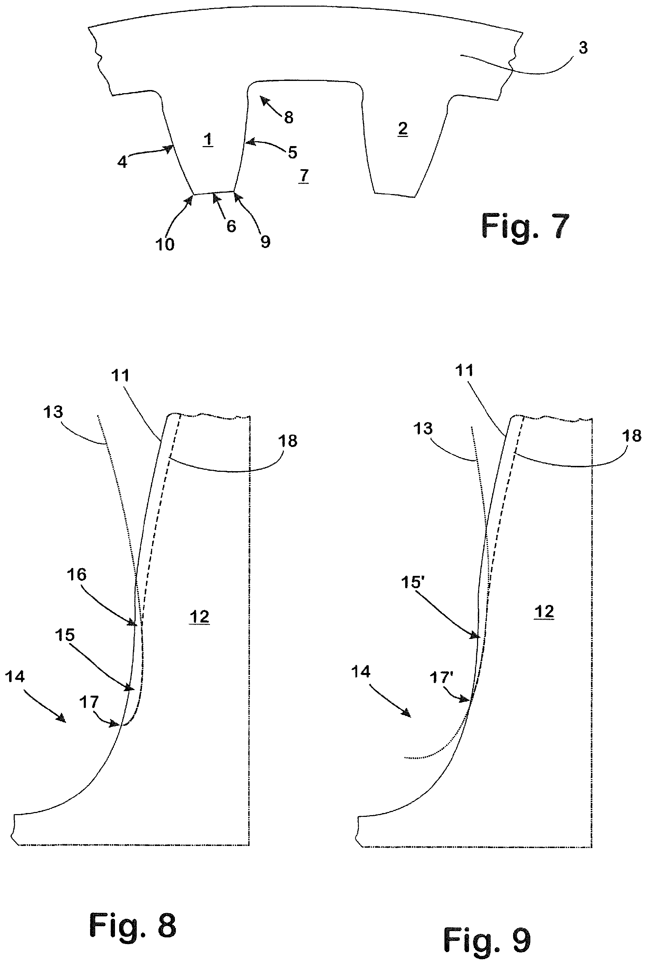

Die in Figur 7 gezeigten Zähne 1,2 eines in konventioneller Weise abgerichteten, nach Art eines innenverzahnten Honrings ausgebildeten Honwerkzeugs 3 haben jeweils einander gegenüberliegende Zahnflanken 4,5 und eine sich zwischen den Zahnflanken 4,5 erstreckende Kopffläche 6. Zwischen sich begrenzen die jeweils benachbarten Zähne 1,2 des Honwerkzeugs 3 jeweils eine Zahnlücke 7, zu deren Grund die jeweiligen Zahnflanken 4,5 der Zähne 1,2 jeweils in einem Zahnfußbereich 8 übergehen.

Die Zahnflanken 4,5 sind bei dem in Fig. 7 dargestellten konventionellen Honwerkzeug 3 in konventioneller Weise mit einem hier nicht gezeigten außenverzahnten radförmigen Abrichtwerkzeug abgerichtet worden.

In einem separaten Arbeitsgang sind die Kopfflächen 6 der Zähne 1,2 abgerichtet worden. Dabei ist mittels eines ebenso konventionellen, hier nicht gezeigten Werkzeugs an den Kopfflächen 6 vorhandenes Material gleichmäßig abgetragen worden.

Infolge dieser konventionellen Abrichtbearbeitung ist am Übergang der Kopffläche 6 zu den Zahnflanken 4,5 jeweils eine scharfkantig ausgeformte Kopfecke 9,10 entstanden.

Die Figuren 8 und 9 verdeutlichen das Ergebnis einer mit dem konventionell abgerichteten Honwerkzeug 3 erfolgten Honbearbeitung der Zahnflanken eines außenverzahnten Zahnrads.

In Figur 8 ist hierzu die Profillinie 11 eines Zahns 12 des Zahnrads im Normalschnitt vor der Honbearbeitung als durchgezogene Linie dargestellt.

Die in Fig. 8 gepunktet dargestellte Bahnkurve 13 beschreibt den Weg, den bei entsprechender Betriebsweise beispielsweise die Kopfecke 9 des Honwerkzeugs 3 relativ zum Zahn 12 zurücklegt, wenn der jeweilige Zahn 1,2 des Honwerkzeugs 3 während der Honbearbeitung an dem Zahn 12 des zu honenden Zahnrads abwälzt.

Es ist ersichtlich, dass die Kopfecke 9 im Zahnfußbereich 14 des Zahns 12 eine kehlenartig eingewölbte Kerbe 15 formt.

Die Kerbe 15, die sich bei Geradverzahnungen in parallel zur Drehachse des jeweiligen Zahnrads ausgerichteter Längsrichtung der jeweiligen Zahnlücke 7 oder bei Schrägverzahnungen entlang der Steigungshelix erstreckt, ist an den Stellen, an denen die Kopfecke 9 in das Material des Zahns 12 taucht bzw. es wieder verlässt, jeweils durch eine Kante 16,17 begrenzt. Insbesondere die Kante 17, an der die Kopfecke 9 wieder aus dem Material des Zahns 12 austritt, ist dabei scharfkantig ausgebildet.

Nach dem Honen weist der Zahn 12 daher in seinem Zahnfußbereich 14 eine in Fig. 8 gestrichelt dargestellte Profillinie 18 auf, deren Verlauf durch eine durch die Kerbe 15 bedingte Einwölbung gekennzeichnet ist. Die Kerbe 15 führt zu einer Schwächung des Zahns 12 in seinem Zahnfußbereich 14. Darüber hinaus wird mit der konventionellen Bearbeitungsweise der Zahnfußbereichs 14 nur teilweise von den Zähnen 1,2 des Honwerkzeugs 3 erfasst. Eine vollständige Honbearbeitung des Zahnfußbereichs 14 unterbleibt somit.

Die Auswirkungen der am Honwerkzeug vorhandenen Kopfecke 9 werden mit fortschreitender Gebrauchsdauer des Honwerkzeugs 3 gemindert. Sie bleiben jedoch, wie Figur 9 zeigt, im Prinzip erhalten. Aufgrund des mit dem Abrichten des Honwerkzeugs 3 einhergehenden Materialabtrags an der Kopffläche 6 des jeweiligen Zahns 1,2 werden die Kopfecken 9,10 mit jedem Abrichtvorgang in Richtung des Außenumfangs des Honwerkzeugs 3 verlagert. Infolgedessen taucht die Kopfecke 9 nach wiederholtem Abrichten des Honrings 3 nicht mehr so stark in den Zahnfußbereich 14 ein, wie noch beim neuen Honring 3 (s. Fig. 8). Dennoch ergibt sich auch hier eine wenn auch nicht so tiefe Kerbe 15', die insbesondere an dem nicht von der konventionellen Honbearbeitung erfassten Abschnitt des Zahnfußbereichs 14 nach wie vor von einer scharfen Kante 17' begrenzt ist.

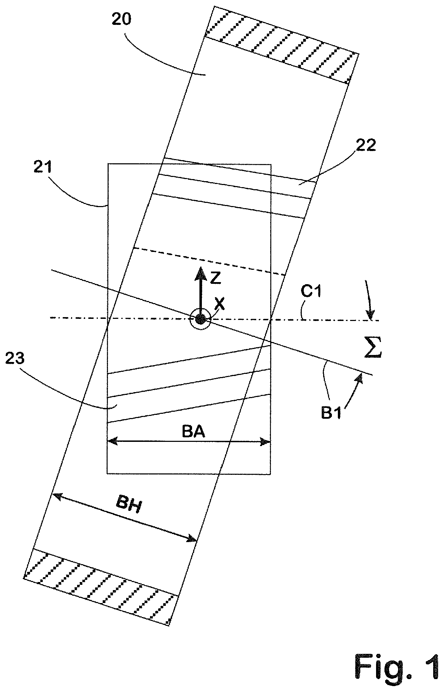

Figur 1 zeigt schematisch ein ebenfalls als innenverzahnter Honring ausgebildetes Honwerkzeug 20 beim Abrichten mittels eines erfindungsgemäß geformten nach Art eines außenverzahnten Zahnrads ausgebildeten Abrichtwerkzeugs 21. Das Honwerkzeug 20 und das Abrichtwerkzeug 21 sind hier schrägverzahnt. Jedoch kann in gleicher Weise die Abrichtbearbeitung bei Geradverzahnung erfolgen.

Die parallel zur Drehachse des Honwerkzeugs 20 gemessene Breite BH der Zähne 22 des Honwerkzeugs 20 entspricht mindestens der parallel zur Drehachse des Abrichtwerkzeugs 21 gemessenen Breite BA der Zähne 23 des Abrichtwerkzeugs 21.

Das Honwerkzeug 20 ist um eine Drehachse B1 angetrieben. Synchron dazu dreht das Abrichtwerkzeug 21 um eine Drehachse C1. Die Drehachse B1 und die Drehachse C1 sind hierzu im Raum windschief und um einen Achskreuzwinkel ∑ zueinander verschwenkt ausgerichtet. Das Honwerkzeug 20 und das Abrichtwerkzeug 21 sind dabei so aufeinander zugestellt, dass die Zähne 22 des Honwerkzeugs 20 und die Zähne 23 des Abrichtrads 21 kontinuierlich aufeinander abwälzen. In Folge der Abwälzbewegung werden die Zähne 22 des Honwerkzeugs 20 durch die Zähne 23 des Abrichtwerkzeugs 23 profiliert.

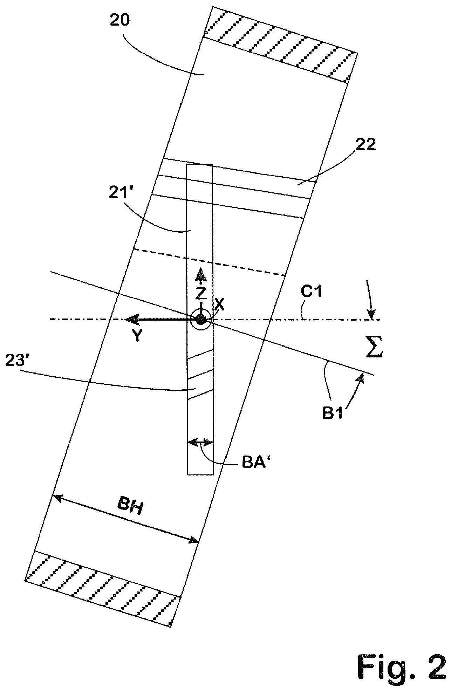

In Figur 2 ist als alternative Ausführung ein Abrichtwerkzeug 21' im Zusammenwirken mit einem Honwerkzeug 20 dargestellt. Das Abrichtwerkzeug 21' ist ebenfalls nach Art eines außenverzahnten Zahnrads ausgebildet. Jedoch weisen die Zähne 23' des Abrichtwerkzeugs 21' eine in Fig. 2 nicht maßstäblich gezeigte Breite BA' auf, die höchstens einem Fünftel der Breite BH der Zähne 22 des Honwerkzeugs 20 entspricht, vorzugsweise jedoch sehr viel kleiner ist, also beispielsweise nur ein Zehntel oder ein Fünfzehntel der Breite BH beträgt, so dass beim Abwälzen des Abrichtwerkzeugs 21' an dem Honwerkzeug 20 optimalerweise ein annähernd strich- oder linienförmiger Kontakt zwischen den Zähnen 22 des Honwerkzeugs 20 und den Zähnen 23' des Abrichtwerkzeugs 21' besteht.

Um trotz seiner minimierten Breite BA' die Zähne 22 des Honwerkzeugs 20 bearbeiten zu können, wird das

Abrichtwerkzeug 21 während des Abrichtens zusätzlich entlang einer Achse Y, die koaxial zur Drehachse C1 ausgerichtet ist, in Längsrichtung durch die jeweilige Zahnlücke bewegt.

Der Vorteil der Verwendung des schmalen Abrichtwerkzeugs 21' besteht gegenüber dem breiten Abrichtwerkzeug 20 darin, dass bei dem Abrichtwerkzeug 21' in Folge von dessen minimierter Breite keine Gefahr besteht, dass es zu einer unbeabsichtigten Kollision zwischen den Zähnen 22 des Honwerkzeugs 20 und den Zähnen 23' des Abrichtwerkzeugs 21' kommt, wenn die Zähne 23' des Abrichtwerkzeugs 21' an den Zähnen 22 des Honwerkzeugs 20 abwälzen. Dies eröffnet größere Freiheiten bei der durch das Abrichtwerkzeug 21' an den Zähnen des Honwerkzeugs 20 abzubildenden Zahnform, die bei der anschließenden Honbearbeitung auf die Zähne des jeweils zu honenden Zahnrads übertragen wird.

Im Übrigen entspricht die Kinematik während des Abrichtens bei Verwendung des schmalen Abrichtrads 21' der Kinematik, nach der das Abrichten bei Verwendung des Abrichtrads 21 erfolgt. Daher beschränken sich die nachfolgenden Erläuterungen nur auf das Abrichten mit dem Abrichtrad 21'.

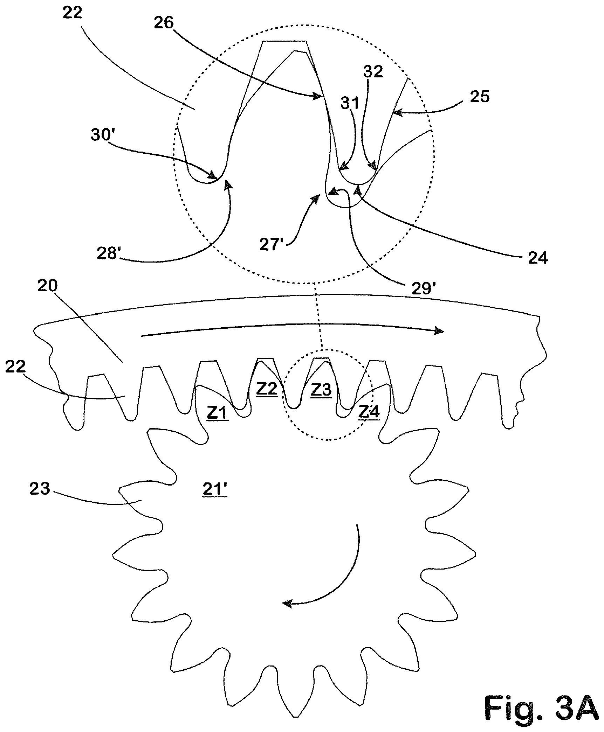

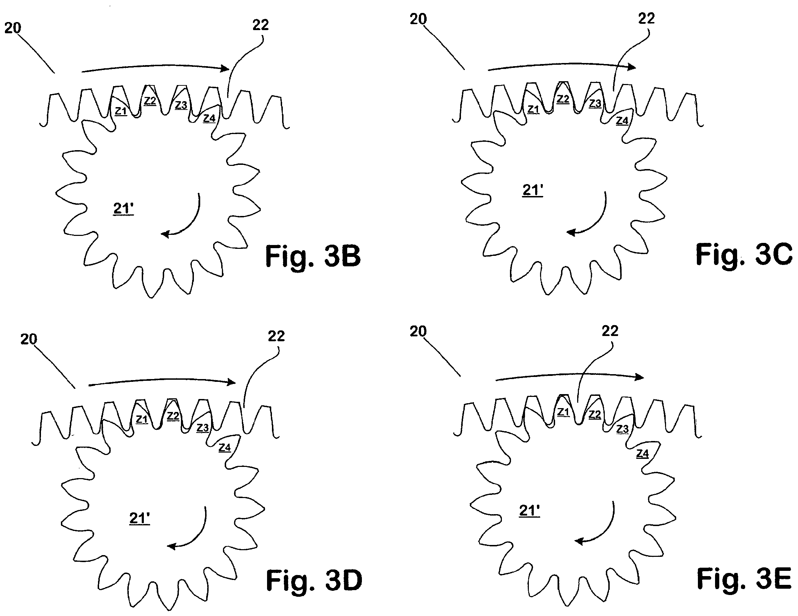

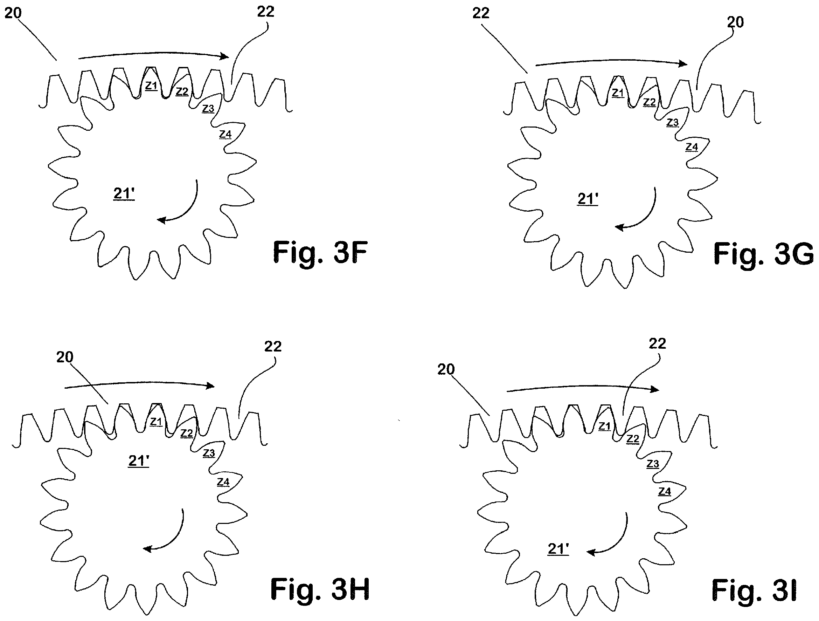

Die während der Abrichtbearbeitung mit den Zähnen 23' des Abrichtwerkzeugs 21' kämmenden Zähne 22 des Honwerkzeugs 20 haben jeweils eine Kopffläche 24 und gegenüberliegend angeordnete Zahnflanken 25,26. In jeder der in den Figuren 3A bis 3I dargestellten Wälzstellungen sind wenigstens zwei Zähne 23' des Abrichtwerkzeugs 21' mit einer entsprechenden Anzahl von Zähnen 22 des Honwerkzeugs 20 im Eingriff.

Zur Verdeutlichung des Bewegungsablaufs sind in den Figuren 3A - 3I von den Zähnen 23' des Abrichtrads 21' vier aufeinander folgende Zähne mit Z1, Z2, Z3 und Z4 bezeichnet.

Das Abrichtwerkzeug 21' hat im jeweiligen Zahnfußbereich 27',28' seiner Zähne 23' Zahnfußausrundungen 29',30', die am Honwerkzeug 20 die Kopfflächen 24 und den jeweiligen Übergang 31,32 abformen, in dem die Kopfflächen 24 in die jeweils angrenzende Zahnflanke 25,26 seiner Zähne 22 übergehen. Die Zahnfußausrundungen 29',30' sind jeweils als kontinuierliche, sprungfreie Kurvenzüge ausgebildet, so dass auch die an den Zähnen 22 des Honwerkzeugs 21 abgeformten Übergänge 31,32 sprungfrei und kontinuierlich gebogen ausgebildet werden.

Das Abrichtwerkzeug 21' wirkt insoweit nach Art eines Meisterrads, bei dem die Geometrie der Zähne 23' der Sollgeometrie der Zähne des mit dem Honwerkzeug 20 jeweils zu honenden Zahnrads entspricht.

Während des Abrichtens wird das Abrichtwerkzeug 21' entlang der Achse X in Richtung des Honwerkzeugs 20 zugestellt und längs der Bewegungsachse Y bewegt. Anhand der in den Figuren 3A bis 3I mit Z1 - Z4 bezeichneten Zähnen 23' des Abrichtwerkzeugs 21' kann schrittweise nachvollzogen werden, wie die Zahnfußausrundungen 29',30' des Abrichtwerkzeugs 21' in einem kontinuierlichen Ablauf auf die Kopfflächen 24 der Zähne 22 des Honwerkzeugs 21 abgebildet werden.

Um ein vorverzahntes Zahnrad mit dem in erfindungsgemäßer Weise abgerichteten Honwerkzeug 20 durch Honen feinzubearbeiten, wird das zu honende Zahnrad anstelle des Abrichtrads 21 auf der Drehachse C1 der hier weiter nicht dargestellten Werkzeugmaschine positioniert. Die Kinematik während des Honens entspricht grundsätzlich der Kinematik, die aus den Figuren 3A bis 3I für das Abrichtverfahren hervorgeht und voranstehend erläutert worden ist. Allerdings werden während des Honens im Vergleich zum Abrichten höhere Drehzahlen des zu honenden Zahnrads und des synchron laufenden Honwerkzeugs 20 gewählt.

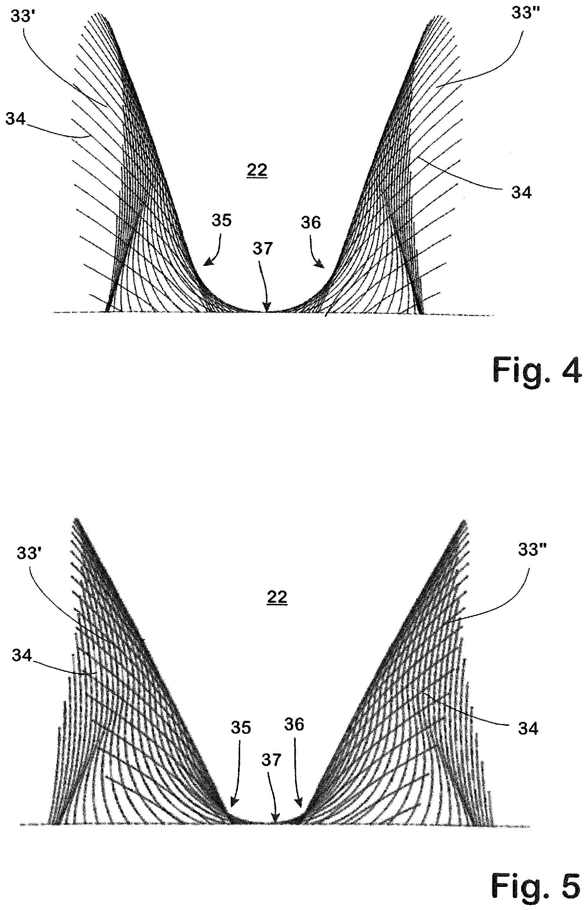

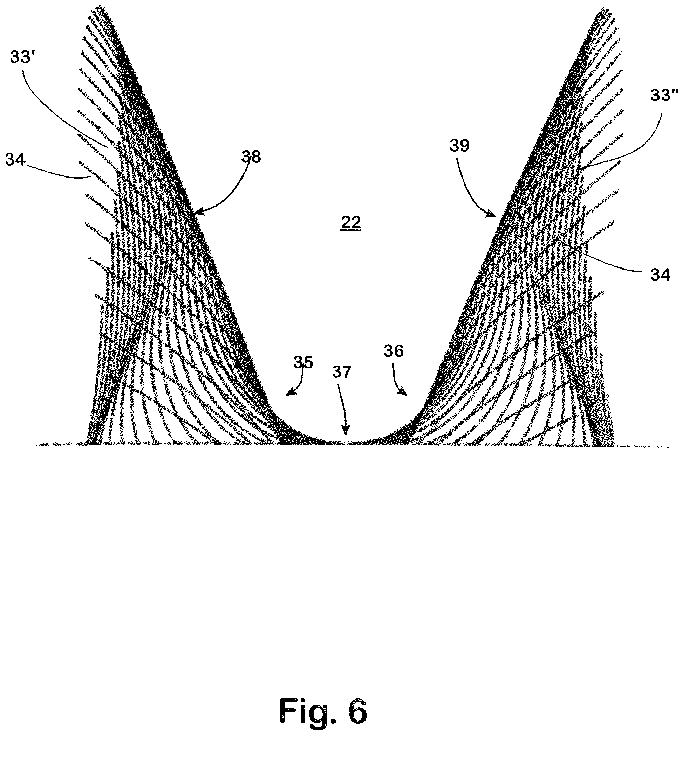

Die Figuren 4 bis 6 zeigen schematisch einen Zahn 22 eines in erfindungsgemäßer Weise abgerichteten Honwerkzeugs 20 und zwar im Neuzustand (Fig. 4), in einem Endzustand (Fig. 5) nach dem letzten innerhalb der zulässigen Nutzlänge noch zugelassenen Abrichtvorgangs und in einem Zustand, den der Zahn zwischen den beiden in den Figuren 4 und 5 dargestellten Extremzuständen aufweist (Fig. 6).

Dabei sind nach Art eines Drahtmodels in den Figuren 4 bis 6 durch Linien die Spuren 34 dargestellt, entlang derer die Zähne 23' des Abrichtrads 21' bei der Abrichtbearbeitung mit dem Zahn 22 des Honwerkzeugs 20 abwälzen. Es ist ersichtlich, dass die Abrichtbearbeitung den gesamten Zahnfußbereich 35,36 des Zahns 22 sowie den Grund 37 der seitlich an den Zahn 22 angrenzenden Zahnlücken 33',33" des Honwerkzeugs 20 erfasst und die Übergänge 35,36 zwischen den Zahnflanken 38,39 und der Kopffläche 37 des Zahns 22 des Honrings 20 kontinuierlich und sprungfrei abgerundet sind.

### BEZUGSZEICHEN

- 1,2: Zähne des Honwerkzeugs 3
- 3: Honwerkzeug
- 4,5: Zahnflanken der Zähne 1,2
- 6: Kopffläche der Zähne 1,2
- 7: Zahnlücke
- 8: Zahnfußbereich
- 9,10: scharfkantig ausgeformte Kopfecken
- 11: Profillinie
- 12: Zahn eines zu honenden Zahnrads
- 13: Bahnkurve
- 14: Zahnfußbereich des Zahns 12
- 15,15': Kerbe
- 16,17: scharfe Kanten
- 17': scharfe Kante
- 18: Profillinie

- 20: Honwerkzeug
- 21: Abrichtwerkzeug
- 21': Abrichtwerkzeug
- 22: Zähne des Honwerkzeugs 20
- 23: Zähne des Abrichtwerkzeugs 21.
- 23': Zähne des Abrichtwerkzeugs 21'
- 24: Kopffläche
- 25,26: Zahnflanken
- 27',28': Zahnfußbereiche
- 29',30': Zahnfußausrundungen
- 31,32: Übergänge
- 33',33": Zahnlücken
- 34: Spuren
- 35,36: Zahnfußbereich der Zähne 22',22"
- 37: Grund der Zahnlücke 33
- 38,39: Zahnflanken der Zähne 22',22"

- BA: Breite der Zähne 23 des Abrichtwerkzeugs 21
- BA': Breite der Zähne 23'
- BH: Breite der Zähne 22
- B1: Drehachse
- C1: Drehachse
- ∑: Achskreuzwinkel
- X,Y,Z: Bewegungsachsen, orthogonal zueinander ausgerichtet
- Z1-Z4: Zähne des Abrichtwerkzeugs 21' (Fig. 3A - 3I)

## Patentansprüche

1. Verfahren zum Abrichten eines für die Feinbearbeitung der Zähne eines Zahnrads bestimmten Honwerkzeugs (20) mittels eines Abrichtwerkzeugs (21,21'), das während des Abrichtens mit dem abzurichtenden Honwerkzeug (20) unter einem Achskreuzwinkel (∑) kontinuierlich abwälzt, so dass an dem Abrichtwerkzeug (21) ausgebildete Zähne (23) in Eingriff kommen mit an dem Honwerkzeug (20) ausgebildeten Zähnen (22), die jeweils eine abzurichtende Kopffläche (24) und ebenso abzurichtende Zahnflanken (25,26,38,39) aufweisen, **dadurch gekennzeichnet, dass** in wenigstens einer Zustellung des Abrichtwerkzeugs (21,21') sowohl die Kopfflächen (24) als auch die Zahnflanken (25,26) des Honwerkzeugs (20) bearbeitet werden, und **dass** mit Zahnfußausrundungen (29',30'), die an den Zähnen (23,23') des Abrichtwerkzeugs (21,21') vorgesehen sind, an dem Honwerkzeug (20) sprungfreie Übergänge (31,32) von den Zahnflanken (25,26) zu den Kopfflächen (24) abgebildet werden.

2. Verfahren nach Anspruch 1, **dadurch gekennzeichnet, dass** das Honwerkzeug (20) ein innenverzahnter Honring ist.

3. Verfahren nach Anspruch 1, **dadurch gekennzeichnet, dass** das Honwerkzeug (20) ein außenverzahntes Zylinderrad ist.

4. Verfahren nach einem der voranstehenden Ansprüche, **dadurch gekennzeichnet, dass** die Geometrie der Zahnfußausrundungen (29',30') der Zähne (23,23') des Abrichtwerkzeugs (21,21') einer Sollgeometrie der Zähne des mit dem Honwerkzeug (20) jeweils zu bearbeitenden Zahnrads im fertig bearbeiteten Zustand entspricht.

5. Verfahren nach Anspruch 4, **dadurch gekennzeichnet, dass** die gesamte Geometrie der Zähne (23,23') des Abrichtwerkzeugs (21, 21') der Sollgeometrie der Zähne des mittels des Honwerkzeugs zu bearbeitenden Zahnrads im fertig bearbeiteten Zustand entspricht.

6. Verfahren nach einem der Ansprüche 1 bis 4, **dadurch gekennzeichnet, dass** die Sollgeometrie der Zähne (22) des Honwerkzeugs (20) durch eine während der Abrichtbearbeitung erfolgende Verstellung der relativen Lage von Abrichtwerkzeug (21,21') und abzurichtendem Honwerkzeug (20) erzeugt wird.

7. Verfahren nach Anspruch 6, **dadurch gekennzeichnet, dass** durch die Verstellung der relativen Lage an dem durch das Honwerkzeug (20) zu bearbeitenden Zahnrad abzubildende Verzahnungsmodifikationen in die Zähne (22) des Honwerkzeugs (20) eingebracht werden.

8. Verfahren nach einem der voranstehenden Ansprüche, **dadurch gekennzeichnet, dass** das Abrichtwerkzeug (21,21') und das Honwerkzeug (20) schrägverzahnt sind.

9. Verfahren nach einem der voranstehenden Ansprüche, **dadurch gekennzeichnet, dass** die Breite (BA) der Zähne (23') des Abrichtwerkzeugs (21') um so viel kleiner als die Breite (BH) der Zähne (22) des Honwerkzeugs (20) ist, dass das Abrichtwerkzeug (21') zum Überstreichen der Breite (BH) der Zähne (22) des abzurichtenden Honwerkzeugs (20) um eine Länge in Längsrichtung einer zwischen zwei Zähnen (22) des Honwerkzeugs (20) gebildeten Zahnlücke (33) bewegt werden muss, die einem Vielfachen der Breite (BA) der Zähne (23') des Abrichtwerkzeugs (21') entspricht.

10. Verfahren nach Anspruch 9, **dadurch gekennzeichnet, dass** die Breite (BA) der Zähne (23') des Abrichtwerkzeugs (21') höchstens einem Fünftel der Breite (BH) der Zähne (22) des abzurichtenden Honwerkzeugs (20) entspricht.

11. Verfahren nach Anspruch 10, **dadurch gekennzeichnet, dass** die Zähne (23') des Abrichtwerkzeugs (21') im Bereich ihrer mit dem Honwerkzeug (20) in Kontakt kommenden Flächen nach Art einer Messerschneide ausgebildet sind.

12. Verfahren nach einem der voranstehenden Ansprüche, **dadurch gekennzeichnet, dass** der Achskreuzwinkel (∑) 3° bis 25° beträgt.

13. Verfahren nach einem der voranstehenden Ansprüche, **dadurch gekennzeichnet, dass** wenigstens zwei einander zugewandte Zahnflanken (38,39) zweier benachbart zueinander angeordneter Zähne (22',22") des Honwerkzeugs (20) in wenigstens einer Wälzstellung gleichzeitig mit einem Zahn (23') des Abrichtwerkzeugs (21') in Kontakt sind.

14. Verfahren zum Honen eines Zahnrads mittels eines Honwerkzeugs, das während des Honvorgangs unter einem Achskreuzwinkel (∑) kontinuierlich mit dem zu honenden Zahnrad abwälzt, so dass die Zähne (22) des Honwerkzeugs (20) mit den Zähnen des Zahnrads in Eingriff kommen, **dadurch gekennzeichnet, dass** das Honwerkzeug (20) durch Anwendung des gemäß einem der Ansprüche 1 bis 13 ausgebildeten Verfahrens abgerichtet ist, so dass zwischen den Kopfflächen (24) und den Zahnflanken (25,26,38,39) des Honwerkzeugs (20) sprungfreie Übergänge (31,32) gebildet sind, **dass** in wenigstens einer Zustellung des Honwerkzeugs (20) sowohl die Kopfflächen (24) als auch die Zahnflanken (25,26,38,39) des Honwerkzeugs (20) die zu honende Verzahnung bearbeiten, und **dass** mit den Zahnflanken (25,26,38,39) und den Kopfflächen (24) des Honwerkzeugs Zahnfußausrundungen an den Zähnen des Zahnrads abgebildet werden.

15. Verfahren nach Anspruch 14, **dadurch gekennzeichnet, dass** die zwischen benachbarten Zähnen des Zahnrads gebildeten Zahnfußbereiche vollständig mit dem Honwerkzeug (20) bearbeitet werden, so dass die zwischen zwei Zähnen vorhandenen Zahnfußbereiche des Zahnrads jeweils einen kontinuierlich durchlaufenden Verlauf haben, der sprungfrei in die jeweils benachbarten Zahnflanken der benachbarten Zähne übergeht.

## Claims

1. Method for dressing a honing tool (20) which is intended for the fine machining of the teeth of a toothed wheel using a dressing tool (21, 21') which, during the dressing operation with the honing tool (20) which is intended to be dressed, continuously rolls at an axial intersection angle (∑) so that teeth (23) which are formed on the dressing tool (21) move into engagement with teeth (22) which are formed on the honing tool (20) and which each have an upper face (24) which is intended to be dressed and tooth flanks (25, 26, 38, 39) which are also intended to be dressed, **characterised in that** in at least one positioning of the dressing tool (21, 21') both the upper faces (24) and the tooth flanks (25, 26) of the honing tool (20) are processed, and **in that**, using tooth base rounded portions (29', 30') which are provided on the teeth (23, 23') of the dressing tool (21, 21'), step-free transitions (31, 32) from the tooth flanks (25, 26) to the upper faces (24) are modelled on the honing tool (20).

2. Method according to Claim 1, **characterised in that** the honing tool (20) is an internally toothed honing ring.

3. Method according to Claim 1, **characterised in that** the honing tool (20) is an externally toothed cylinder wheel.

4. Method according to any one of the preceding claims, **characterised in that** the geometry of the tooth base rounded portions (29', 30') of the teeth (23, 23') of the dressing tool (21, 21') corresponds to a desired geometry of the teeth of the toothed wheel which is intended to be processed with the honing tool (20) in each case in the completely processed state.

5. Method according to Claim 4, **characterised in that** the entire geometry of the teeth (23, 23') of the dressing tool (21, 21') corresponds to the desired geometry of the teeth of the toothed wheel which is intended to be processed with the honing tool in the completely processed state.

6. Method according to any one of Claims 1 to 4, **characterised in that** the desired geometry of the teeth (22) of the honing tool (20) is produced by means of an adjustment of the relative position of the dressing tool (21, 21') and honing tool (20) which is intended to be dressed, which adjustment is carried out during the dressing processing operation.

7. Method according to Claim 6, **characterised in that**, as a result of the adjustment of the relative position, toothing modifications which are intended to be modelled on the toothed wheel which is intended to be processed by the honing tool (20) are introduced into the teeth (22) of the honing tool (20).

8. Method according to any one of the preceding claims, **characterised in that** the dressing tool (21, 21') and the honing tool (20) are toothed in an oblique manner.

9. Method according to any one of the preceding claims, **characterised in that** the width (BA) of the teeth (23') of the dressing tool (21') is smaller than the width (BH) of the teeth (22) of the honing tool (20) to such an extent that the dressing tool (21') has to be moved to pass over the width (BH) of the teeth (22) of the honing tool (20) which is intended to be dressed by a length in the longitudinal direction of a tooth gap (33) which is formed between two teeth (22) of the honing tool (20) and which corresponds to a multiple of the width (BA) of the teeth (23') of the dressing tool (21').

10. Method according to Claim 9, **characterised in that** the width (BA) of the teeth (23') of the dressing tool (21') corresponds to a maximum of a fifth of the width (BH) of the teeth (22). of the honing tool (20) which is intended to be dressed.

11. Method according to Claim 10, **characterised in that** the teeth (23') of the dressing tool (21') are constructed in the region of the faces thereof which come into contact with the honing tool (20) in the manner of a knife blade.

12. Method according to any one of the preceding claims, **characterised in that** the axial intersection angle (∑) is from 3° to 25°.

13. Method according to any one of the preceding claims, **characterised in that** at least two mutually facing tooth flanks (38, 39) of two teeth (22', 22") of the honing tool (20) which are arranged adjacent to each other are in contact with a tooth (23') of the dressing tool (21') at the same time in at least one rolling position.

14. Method for honing a toothed wheel using a honing tool which, during the honing operation, continuously rolls at an axial intersection angle (∑) with the toothed wheel which is intended to be honed so that the teeth (22) of the honing tool (20) move into engagement with the teeth of the toothed wheel, **characterised in that** the honing tool (20) is dressed using the method which is configured in accordance with any one of Claims 1 to 13 so that between the upper faces (24) and the tooth flanks (25, 26, 38, 39) of the honing tool (20) step-free transitions (31, 32) are formed, **in that**, in at least one positioning of the honing tool (20), both the upper faces (24) and the tooth flanks (25, 26, 38, 39) of the honing tool (20) process the toothing which is intended to be honed, and **in that**, with the tooth flanks (25, 26, 38, 39) and the upper faces (24) of the honing tool, tooth base rounded portions are modelled on the teeth of the toothed wheel.

15. Method according to Claim 14, **characterised in that** the tooth base regions formed between adjacent teeth of the toothed wheel are completely processed with the honing tool (20) so that the tooth base regions of the toothed wheel provided between two teeth each have a continuously extending path which merges in a step-free manner into the adjacent tooth flanks of the adjacent teeth in each case.

## Revendications

1. Procédé de dressage d'un outil de rodage (20) destiné à l'usinage fin des dents d'une roue dentée au moyen d'un outil de dressage (21, 21') qui, pendant le dressage, roule en continu avec l'outil de rodage (20) à dresser selon un angle de croisement d'axes (∑), de sorte que des dents (23) formées sur l'outil de dressage (21) viennent en prise avec des dents (22) formées sur l'outil de rodage (20), lesquelles dents ont chacune une surface de tête (24) à dresser et des flancs de dents (25, 26, 38, 39) qui sont également à dresser,
**caractérisé**
- **en ce que**, dans au moins une entrée de l'outil de dressage (21, 21'), aussi bien les surfaces de tête (24) que les flancs de dents (25, 26) de l'outil de rodage (20) sont usinés, et
- **en ce que** des transitions sans palier (31, 32) sont formées depuis les flancs de dents (25, 26) vers les surfaces de tête (24) sur l'outil de rodage (20) à l'aide de bases de dents arrondies (29', 30') prévues au niveau des dents (23, 23') de l'outil de dressage (21, 21').

2. Procédé selon la revendication 1, **caractérisé en ce que** l'outil de rodage (20) est une bague de rodage à denture interne.

3. Procédé selon la revendication 1, **caractérisé en ce que** l'outil de rodage (20) est une roue cylindrique à denture extérieure.

4. Procédé selon l'une des revendications précédentes, **caractérisé en ce que** la géométrie des bases de dents arrondies (29', 30') des dents (23, 23') de l'outil de dressage (21, 21') correspond à une géométrie souhaitée des dents de la roue dentée à usiner respectivement avec l'outil de rodage (20) à l'état fini d'usinage.

5. Procédé selon la revendication 4, **caractérisé en ce que** la géométrie globale des dents (23, 23') de l'outil de dressage (21, 21') correspond à la géométrie souhaitée des dents de la roue dentée à usiner au moyen de l'outil de rodage à l'état fini d'usinage.

6. Procédé selon l'une des revendications 1 à 4, **caractérisé en ce que** la géométrie souhaitée des dents (22) de l'outil de rodage (20) est obtenue par un ajustement de la position relative de l'outil de dressage (21, 21') et de l'outil de rodage (20) à dresser, ajustement qui a lieu pendant l'opération de dressage.

7. Procédé selon la revendication 6, **caractérisé en ce qu'**en ajustant la position relative, des modifications à reproduire sur la roue dentée à usiner par l'outil de rodage (20) sont introduites dans les dents (22) de l'outil de rodage (20).

8. Procédé selon l'une des revendications précédentes, **caractérisé en ce que** l'outil de dressage (21, 21') et l'outil de rodage (20) sont à denture oblique.

9. Procédé selon l'une quelconque des revendications précédentes, **caractérisé en ce que** la largeur (BA) des dents (23') de l'outil de dressage (21') est d'autant inférieure à la largeur (BH) des dents (22) de l'outil de rodage (20) que, pour balayer la largeur (BH) des dents (22) de l'outil de rodage (20) à dresser, l'outil de dressage (21') doit être déplacé dans le sens longitudinal d'un entredent (33) formé entre deux dents (22) de l'outil de rodage (20) d'une longueur qui correspond à un multiple de la largeur (BA) des dents (23') de l'outil de dressage (21').

10. Procédé selon la revendication 9, **caractérisé en ce que** la largeur (BA) des dents (23') de l'outil de dressage (21') correspond au plus à un cinquième de la largeur (BH) des dents (22) de l'outil de rodage (20) à dresser.

11. Procédé selon la revendication 10, **caractérisé en ce que** les dents (23') de l'outil de dressage (21') sont conçues à la manière d'une lame de couteau dans la zone de leurs surfaces venant en contact avec l'outil de rodage (20).

12. Procédé selon l'une des revendications précédentes, **caractérisé en ce que** l'angle de croisement d'axes (∑) est de 3° à 25°.

13. Procédé selon l'une des revendications précédentes, **caractérisé en ce qu'**au moins deux flancs de dents (38, 39) orientés l'un vers l'autre de deux dents (22', 22") de l'outil de rodage (20) disposées de manière adjacente sont simultanément en contact avec une dent (23') de l'outil de dressage (21') dans au moins une position de roulement.

14. Procédé de rodage d'une roue dentée au moyen d'un outil de rodage qui, pendant l'opération de rodage, roule en continu selon un angle de croisement d'axes (∑) avec la roue dentée à roder, de sorte que les dents (22) de l'outil de rodage (20) viennent en prise avec les dents de la roue dentée,
**caractérisé**
- **en ce que** l'outil de rodage (20) est dressé par application du procédé constitué selon l'une des revendications 1 à 13, de sorte que des transitions sans palier (31, 32) sont formées entre les surfaces de tête (24) et les flancs de dents (25, 26, 38, 39) de l'outil de rodage (20),
- **en ce que**, dans au moins une entrée de l'outil de rodage (20), aussi bien les surfaces de tête (24) que les flancs de dents (25, 26, 38, 39) de l'outil de rodage (20) usinent la denture à roder, et
- **en ce qu'**à l'aide des flancs de dents (25, 26, 38, 39) et des surfaces de tête (24) de l'outil de rodage, des bases de dents arrondies sont formées au niveau des dents de la roue dentée.

15. Procédé selon la revendication 14, **caractérisé en ce que** les zones de base de dent formées entre des dents adjacentes de la roue dentée sont usinées entièrement avec l'outil de rodage (20), de sorte que les zones de base de dent de la roue dentée présentes entre deux dents aient chacune un tracé continu qui se prolonge sans palier jusque dans les flancs de dent adjacents respectifs des dents adjacentes.
